# EUROPEAN PATENT SPECIFICATION

(11) **EP 0 535 108 B1**
(45) Date of publication and mention of the grant of the patent: **01.03.1995**
(21) Application number: 91911958.6
(22) Date of filing: 20.06.1991
(51) Int. Cl.: H02G 15/18, H01R 4/72

(54) **BRANCH-OFF ARRANGEMENT**
ABZWEIGSANORDNUNG
AGENCEMENT DE BRANCHEMENT

(30) Priority: 22.06.1990 GB 9013986
(43) Date of publication of application: 07.04.1993
(73) Proprietor: RAYCHEM LIMITED, London EC4A 1NH (GB)
(72) Inventor: BARRAT, Alan, Swindon, Wiltshire SN5 9PS (GB); MILES, Graham, Swindon, Wiltshire SN5 9RA (GB)
(74) Representative: Jay, Anthony William
(86) International application number: GB9100993
(87) International publication number: WO9200622

## Description

This invention relates to the use of dimensionally recoverable articles for the insulation and/or protection of cables and harnesses.

Dimensionally recoverable articles, especially heat-shrinkable articles, are now widely used in many areas where insulation, sealing and encapsulation are required. Usually these articles recover, on heating, towards an original shape from which they have previously been deformed, but the term "heat-recoverable", as used herein, also includes and article which, on heating, adopts a new configuration, even if it has not been previously deformed.

In their most common form, such articles comprise a heat-shrinkable sleeve made from a polymeric material exhibiting the property of elastic or plastic memory as described, for example, in US Patents 2,027,962; 3,086,242 and 3,597,372. As is made clear in, for example US Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat stable article is deformed to a dimensionally heat unstable form in a separate stage.

In other articles, as described, for example, in British Patent 1,440,524, and elastomeric member such as an outer tubular member is held in a stretched state by a second member, such as an inner tubular member, which, upon heating, weakens and thus allows the elastomeric member to recover.

In certain circumstances it is necessary to enclose a branch in an electrical cable, in which case a clip may be employed to bifurcate the dimensionally recoverable article into two (or more) outlets for the cable, a number of such clips being described in UK patent specification No. 1,604,981. However, most clip arrangements that have been proposed are intended for use with telecommunications cables. In the case of cable harnesses, for example for military applications, the practice has been to employ dimensionally recoverable articles having three or more outlets for the cable and branches. These articles have the disadvantage that, with relatively complex harnesses, it can be a difficult and time-consuming task to thread the various branches of the harness correctly through the various outlets of the article. In addition, in some cases where it is necessary for the article to be slid over existing components on the harness, the diameters of the outlets must be sufficiently large to allow installation of the article, with the result that the diameter of the outlet in its recovered form is too large for the cable branch. In this circumstance it has been necessary to provide the cable branch with one or more layers of packing, eg. by recovering one or more short lengths of heat-shrinkable tubing thereon, in order to build up the diameter of the cable branch. Not only does this solution look unsatisfactory, it can deleteriously affect the sealing ability of the arrangement by increasing the possible number of leak paths for moisture ingress.

According to the present invention, there is provided an arrangement for enclosing a branch-off in an electrical cable or harness in which a cable arm divides into at least two branches, which comprises a dimensionally recoverable hollow open-ended moulded article that can be positioned about the branch-off, and one or more clips which can be positioned about opposed walls of the article to divide the article into channels for the cable branches, the article having one end of larger diameter than the other end in its unexpanded state.

In the arrangement according to the invention, the clip will normally have lateral dimensions (at least when fully installed and at least in the region thereof joining the legs) that are greater in the plane of the cable or harness branches (herein referred to as the width of the clip) than in the direction normal to this plane (herein referred to as the height of the clip). The use of a relatively wide clip in sheet form has the advantage that the part of the clip at the end of the sleeve acts as a dam and prevents fused adhesive flowing directly out of the end of the sleeve. As the sleeve recovers, fused adhesive is forced laterally towards the branches and fills the small spaces extending along the branches and fills the small spaces extending along the branches which are created between each branch and the two opposed walls of the sleeve as the sleeve becomes taught. If these spaces are not filled they can provide leak paths for the ingress of moisture. Preferably the width is at least 1.5 times the height and especially at least twice the height of the clip although it will normally not be more than five times its height.

The arrangement according to the invention has the advantage that it leads to a reduction in the unresolved recovery forces in the dimensionally recoverable article compared with those in an extruded recoverable sleeve that is used to enclose a branch-off. The unresolved recovery forces are those recovery forces remaining in the installed article whenever it is taken above the recovery temperature thereof which are due to the fact that the article, or parts of the article, were unable to recover fully during installation. These unresolved recovery forces can cause problems in use, especially if there is a high degree of unresolved recovery, and can even lead to tearing of the article in severe cases. If, as is usually the case with the present invention, a relatively wide clip is employed, the problems of high unresolved recovery are exacurbated. For example, if a single clip is employed where a cable branches into two, the ratio of installed circumferences at each end of the article will normally be at least 2.5:1, and if two clips are employed to where a cable divides into three, the circumference ratio will normally be at least 3.7:1. This means that if an extruded sleeve were employed to enclose a "3-out" branch-off, it would need to have a recovery ratio of at least 3.7:1. Such sleeves can be difficult to manufacture and even so the sleeve would be allowed to recover at the cable branch end only to a minimal extent causing very high unresolved recovery forces. The use of a larger sleeve or smaller recovery ratio would necessitate the use of packing sleeves as mentioned above in order to increase the size of the cable arm. However, according to the invention it is possible to use a single size recoverable article for enclosing a variety of different branch-offs in which two, three or even more cable branches are formed and even when relatively wide clips are employed.

According to another aspect, the invention provides a method of enclosing a branch-off in an electrical cable or harness in which a cable arm divides into at least two branches, which method comprises:
(i) positioning a dimensionally recoverable hollow open-ended moulded article about the branch-off, the article having, in its fully recovered configuration, one end of larger diameter than the other end, and being positioned so that the end of smaller diameter is located about the cable arm of relatively large diameter;
(ii) positioning a clip about opposed walls of the article at the end of a larger diameter to divide that end into a plurality of outlets for the branches; and
(iii) causing the article to recover about the branch-off.

The recoverable articles in their moulded or fully recovered form will normally have one end region of substantially circular cylindrical configuration, a second end region of smaller diameter than the first end region and a transitional region in which the diameter varies smoothly from one value to the other. The ratio of diameters of the larger diameter end to the smaller diameter end is normally at least 1.5:1, preferably at least 2:1 and especially at least 3:1, but normally not more than 6:1. The articles are expanded during the manufacture by being slid over a mandrel so that, in their expanded state the entire article is substantially cylindrical. The article is slipped over the electrical connector and then recovered by heating so that the large diameter end is located over the connector or over a spin-coupling adaptor of the connector while the small diameter end is located on the diameter cable. According to the present invention, such articles may be employed to enclose a branch-off in an electrical cable or harness if the article is oriented so that the small diameter end of the article is located over the cable arm of relatively large diameter and the large diameter end is located over the cable branches of relatively small diameter. The invention has the advantage that the number of moulded parts required to accommodate different branch-offs in cable harnesses can be significantly reduced, and that location of the moulded article about the branch-off is considerably easier than with multi-outlet moulded articles.

The clip is preferably as described in our copending patent applications, International publication nos. WO 92/00623, WO 92/00621, entitled "Branch-off" and "Harness and Cable Branch-off" filed on even date herewith (Agent's ref: RK429 and RK431, claiming priority from British Application Nos. 9013987.4 and 9013985.8). This form of clip has two or more legs, two of which can be positioned on the outside of the walls of the article, and the clip is deformable so that the legs can be forced towards each other after the clip has been positioned on the article in order to grip the article. The clip is preferably in a generally sheet-like form, each leg having a major surface that faces the other leg, and most preferable has been formed by stamping a shape out of sheet material and folding it into the appropriate shape. This form of clip may easily be pushed onto the edge of the recoverable sleeve due to the splayed out configuration of the legs, and then pressed by means of a pair of pliers or other tool, to force the legs together about the sleeve walls. The clip legs will normally be splayed outwardly by an angle of at least 10° and especially at least 20°, but preferably by not more than 50° and especially not more than 40°, the angle typically being about 30°. The clip is preferably formed from a metal, eg. copper or stainless steel, and will usually have a thickness in the range of from 0.01 to 0.1 times the length of the legs, or typically from 0.4 to 0.8 mm. Such a thickness will normally allow the legs of the clip easily to be forced together by means of a hand-held tool but will give the clip sufficient rigidity in its central region where the legs join to prevent the legs being opened out under the recovery forces of the sleeve.

The clip will normally have a substantially "U" or "V" shaped configuration so that each leg is positioned outside the sleeve walls, although it is quite possible for the clip to have more legs if desired. For example, it could be formed with three legs in a substantially "E" shaped configuration so that the central leg is inserted between the sleeve walls, the central leg being employed, for example, to carry additional adhesive and/or to provide a high conductivity heat-transfer path to the interior of the sleeve.

The clip preferably has legs whose width decreases in a direction away from the central region of the clip. Where such a clip configuration is adopted, the outlet channels formed for the cables will normally be oriented to diverge from one another rather than parallel to one another, which corresponds more closely with the orientation provided by existing moulded parts employed for harness branch-offs. The lateral edges of each clip leg may be curved or straight, but will often be substantially straight over at least a major part of their length, in which case the straight parts preferably subtend an angle in the range of at least 5° and especially at least 10° to each other, but preferably not more than 40° and especially not more than 30° to each other, the angle determining to some extend the angle at which the cables leave the branch-off. In some instances it may be preferable for the cables to be parallel, in which case a clip having parallel lateral edges is preferred.

The dimensionally recoverable article will usually be provided with a layer of adhesive or sealant on its internal surface for preventing moisture ingress. Adhesives or sealants that may be employed include, hot melt adhesives, eg. those based on ethylene homo or copolymer, eg. ethylene vinyl acetate or ethylene ethyl, acrylate, and polyamide adhesives, for example formed from polyamides having a relatively large number (eg. >15 or carbon atoms between adjacent carbonyl groups, preferred polyamides being based on dimer diamines as described in US patent Nos. 4,018,733 and 4,181,775.

The arrangement according to the invention is particularly appropriate for use with recoverable sleeves that are to be sealed from moisture ingress by means of an adhesive that is cured when or after the sleeve is recovered, for example, a two part epoxy adhesive that may be mixed and applied to the sleeve just before recovery. It is particularly advantageous for the curable adhesive to be pre-coated on the sleeve, in which case it is preferably in particulate form so that the reactive components exist separately from one another in the form of particles until recovery of the sleeve. Particulate adhesives that may be employed are described in British patent application No. 2,104,800 A and in European patent application No. 157,478.

The branch-off may need to be screened against electromagnetic interference in which case an electrically conductive shield can be provided inside the recoverable article or a shield can be placed about the branch-off and connected to shielding on the cables or wiring before recovery of the article. Thus, for example, a braid may be placed about the branch-off and connected to exposed lengths of shielding on the cables or wiring by means of an electrically conductive adhesive containing metal flake or solder or by other means such as clips, wire whipping, etc, and the dimensionally recoverable article may then be positioned over the screened branch-off. The walls of the braid can be brought together at one end of the braid and secured together between a pair of cables by means of an additional mechanical retainer, or they may simply be forced together by means of the clip.

The moulded article may be manufactured in a hollow tubular form in which case it will need to be positioned over the ends of the harness or cable and slid along it until it is in position over the branch-off. For applications in which this is inconvenient it may be desirable to form the sleeve as a so-called "wraparound" article in which the article has a slit extending along its length to enable it to be located directly over the branch-off without access to the ends of the harness, and is provided with means for retaining the opposed edges of the sleeve formed by the slit together during and after recovery. The is preferably achieved by means of the rail-and-channel closure described in British patent No. 1,155,470, although other means may be employed, for example, pressure sensitive adhesive on one or both edges and/or an adhesive patch extending over the edge region.

A method according to the invention will now be described by way of example with reference to the accompanying drawings, in which:
- Figure 1: is a side view of a conventional moulded article for enclosing a cable termination to an electrical connector, the article shown in its fully recovered form;
- Figure 2: shows an expanded moulded article positioned about a branch-off in an electrical harness; and
- Figure 3: shows the completed branch-off enclosure.

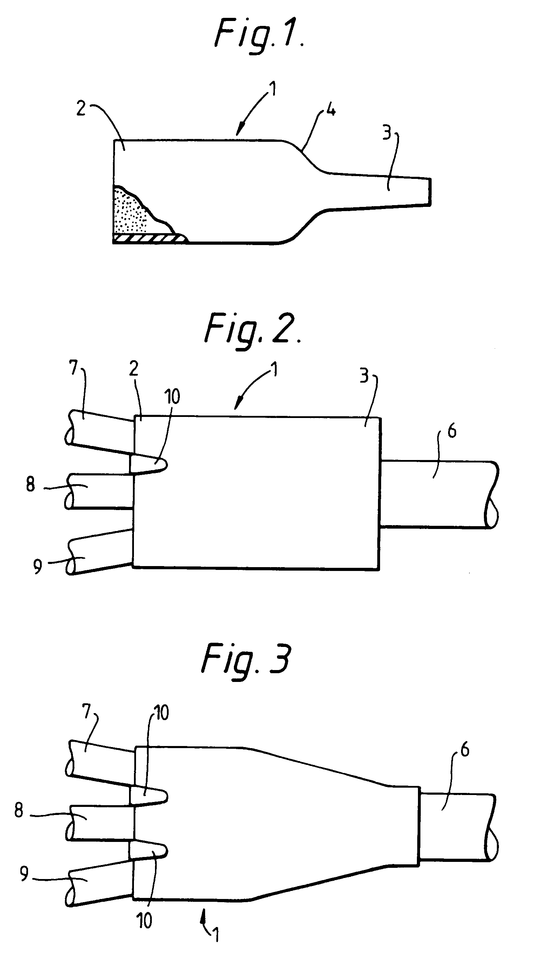

Referring to the accompanying drawings, a moulded article 1 is shown in figure 1 in its fully recovered (or pre-expanded) form. In this form the article has one end 2 of large diameter, an end 3 of smaller diameter, about one third the diameter of end 2, and an intermediate shoulder region 4 in which the diameter of the article changes smoothly from that of one end to that of the other end. The article is expanded in order to render it heat-recoverable by being heated, forced over an expansion mandrel and quenched in its expanded state. In the expanded state the article is substantially cylindrical.

According to the invention, the article in its expanded form is slipped over the end of a cable harness and slid along the harness until is is positioned over a branch-off to be enclosed as shown in figure 2 in which a main cable arm 6 of relatively large diameter divides into three smaller diameter branches 7, 8 and 9. When locating the article over the branch-off, it is important that the end 3 of the article having the smaller recovered diameter is located over the main cable arm of relatively large diameter. Although the entire article is substantially cylindrical in its expanded form it is normally possible to determine which end will have the larger or smaller recovered diameter by reference to markings on the article or to the wall thickness of the article.

A pair of clips are then positioned over the end of the article to divide that end of the article into channels for the cable branches 7, 8 and 9, one such clip 10 being shown between cable branches 7 and 8. When all the clips 10 have been located on the end of the article 1 and have been pressed into engagement with the article if necessary, the article is heated, for example by means of a hot-air gun, a gas torch or an oven, in order to allow the article to recover about the branch-off into the final configuration as shown in figure 3.

## Claims

1. An arrangement for enclosing a branch-off in an electrical cable or harness in which a cable arm divides into at least two branches, which comprises a dimensionally recoverable hollow open-ended moulded article that can be positioned about the branch-off, and one or more clips which can be positioned about opposed walls of the article to divide the article into channels for the cable branches, the article having one end of larger diameter than the other end in its unexpanded state.

2. An arrangement as claimed in claim 1, wherein more than one clip is provided for positioning on the end of larger diameter of the article to divide that end into three or more outlets.

3. An arrangement as claimed in claim 1 or claim 2, wherein the ratio of diameters of the ends of the article is at least 2:1.

4. An arrangement as claimed in any one of claims 1 to 3, wherein the clip comprises a pair of legs that are joined together at a central region of the clip, the clip having, at least in its central region, a width that is greater than it height.

5. An arrangement as claimed in any one of claims 1 to 4, wherein the clip is deformable so that the legs can be forced towards each other after the clip has been positioned on the article in order to grip the article.

6. An arrangement as claimed in any one of claims 1 to 5, wherein the dimensionally recoverable article is a wraparound article.

7. A method of enclosing a branch-off in an electrical cable or harness in which a cable arm divides into at least two branches, which method comprises:
(i) positioning a dimensionally recoverable hollow open-ended moulded article about the branch-off, the article having, in its fully recovered configuration, one end of larger diameter than the other end, and being positioned so that the end of smaller diameter is located about the cable arm of relatively large diameter;
(ii) positioning a clip about opposed walls of the article at the end of larger diameter to divide that end into a plurality of outlets for the branches; and
(iii) causing the article to recover about the branch-off.

## Patentansprüche

1. Anordnung, um eine Abzweigung in einem elektrischen Kabel oder Kabelbaum, bei dem sich ein Kabelarm in mindestens zwei Zweige teilt, zu umschließen, wobei die Anordnung folgendes aufweist:
einen dimensionsmäßig rückstellbaren, hohlen, offenendigen Formgegenstand, der um die Abzweigung herum positioniert werden kann, und einen oder mehrere Clips, die um gegenüberliegende Wände des Gegenstands herum positioniert werden können, um den Gegenstand in Kanäle für die Kabelzweige zu teilen, wobei der Gegenstand in seinem nicht aufgeweiteten Zustand ein Ende mit größerem Durchmesser als das andere Ende hat.

2. Anordnung nach Anspruch 1,
wobei mehr als ein Clip vorgesehen ist, um auf dem Ende des Gegenstands mit dem größeren Durchmesser positioniert zu werden, um dieses Ende in drei oder mehr Auslässe zu teilen.

3. Anordnung nach Anspruch 1 oder 2,
wobei das Verhältnis der Durchmesser der Enden des Gegenstands mindestens 2:1 ist.

4. Anordnung nach einem der Ansprüche 1 bis 3,
wobei der Clip ein Paar Schenkel aufweist, die in einem Mittelbereich des Clips miteinander verbunden sind, wobei der Clip zumindest in seinem Mittelbereich eine Breite hat, die größer als seine Höhe ist.

5. Anordnung nach einem der Ansprüche 1 bis 4,
wobei der Clip verformbar ist, so daß die Schenkel aufeinander zu gedrückt werden können, nachdem der Clip auf dem Gegenstand positioniert worden ist, um den Gegenstand zu greifen.

6. Anordnung nach einem der Ansprüche 1 bis 5,
wobei der dimensionsmäßig rückstellbare Gegenstand ein Umwickelgegenstand ist.

7. Verfahren, um eine Abzweigung in einem elektrischen Kabel oder Kabelbaum, bei dem sich ein Kabelarm in mindestens zwei Zweige teilt, zu umschließen, wobei das Verfahren folgende Schritte aufweist:
(i) Positionieren eines dimensionsmäßig rückstellbaren, hohlen, offenendigen Formgegenstands um die Abzweigung herum, wobei der Gegenstand in seiner vollständig rückgestellten Konfiguration ein Ende mit größerem Durchmesser als das andere Ende hat und so positioniert wird, daß das Ende mit dem kleineren Durchmesser um den Kabelarm mit relativ großem Durchmesser herum angeordnet ist;
(ii) Positionieren eines Clips um gegenüberliegende Wände des Gegenstands an dem Ende mit dem größeren Durchmesser herum, um dieses Ende in eine Vielzahl von Auslässen für die Zweige zu teilen; und
(iii) Bewirken, daß sich der Gegenstand um die Abzweigung herum rückstellt.

## Revendications

1. Agencement pour renfermer une dérivation d'un câble ou faisceau électrique dans lequel un tronçon du câble se divise en au moins deux branches, qui comporte un article moulé creux, ouvert aux extrémités, doué de reprise dimensionnelle, qui peut être positionné autour de la dérivation, et une ou plusieurs attaches qui peuvent être positionnées autour de parois opposées de l'article afin de diviser l'article en canaux pour les branches du câble, l'article ayant une extrémité de plus grand diamètre que l'autre extrémité dans son état non dilaté.

2. Agencement selon la revendication 1, dans lequel il est prévu de positionner plus d'une attache sur l'extrémité de diamètre plus grand de l'article afin de diviser cette extrémité en trois ou plus de trois sorties.

3. Agencement selon la revendication 1 ou la revendication 2, dans lequel le rapport des diamètres des extrémités de l'article est d'au moins 2:1.

4. Agencement selon l'une quelconque des revendications 1 à 3, dans lequel l'attache comporte deux pattes qui sont reliées entre elles dans une zone centrale de l'attache, l'attache ayant, au moins dans sa zone centrale, une largeur qui est plus grande que sa hauteur.

5. Agencement selon l'une quelconque des revendications 1 à 4, dans lequel l'attache est déformable de manière que les pattes puissent être rapprochées à force l'une de l'autre après que l'attache a été positionnée sur l'article afin de pincer l'article.

6. Agencement selon l'une quelconque des revendications 1 à 5, dans lequel l'article doué de reprise dimensionnelle est un article enroulé.

7. Procédé pour renfermer une dérivation d'un câble ou faisceau électrique dans lequel un tronçon de câble se divise en au moins deux branches, lequel procédé comprend :
(i) le positionnement d'un article moulé creux, ouvert aux extrémités, doué de reprise dimensionnelle, autour de la dérivation, l'article ayant, dans sa configuration après reprise de forme complète, une extrémité de diamètre plus grand que l'autre extrémité, et étant positionné de manière que l'extrémité de diamètre plus petit soit placée autour du tronçon du câble de diamètre relativement grand ;
(ii) le positionnement d'une attache autour de parois opposées de l'article à l'extrémité de diamètre plus grand pour diviser cette extrémité en plusieurs sorties pour les branches ; et
(iii) la provocation d'une reprise de forme de l'article autour de la dérivation.
